# EUROPEAN PATENT SPECIFICATION

(11) **EP 3 966 094 B1**
(45) Date of publication and mention of the grant of the patent: **11.11.2026**
(21) Application number: 20723926.0
(22) Date of filing: 06.04.2020
(51) Int. Cl.: B62J 9/21, B62J 9/23, B62J 9/27, B62J 11/04

(54) **MODULAR BAG FOR BICYCLES AND THE LIKE**
MODULARE TASCHE FÜR FAHRRÄDER UND DERGLEICHEN
SAC MODULAIRE POUR VÉLOS ET AUTRES

(30) Priority: 09.05.2019 IT 201900006695
(43) Date of publication of application: 16.03.2022
(73) Proprietor: Brooks England Limited, Birmingham B66 2PA (GB)
(72) Inventor: BIGOLIN, Barbara, 36050 Pozzoleone (Vicenza) (IT); VILLA, Ugo, 36050 Pozzoleone (Vicenza) (IT)
(74) Representative: Feltrinelli, Secondo Andrea
(86) International application number: PCT/IB2020/053258
(87) International publication number: WO 2020/225617

(56) References cited:
- WO-A2-2005/005235
- DE-U1- 202007 011 990
- JP-B1- 5 277 376
- US-A1- 2010 147 918
- US-A1- 2012 187 170

## Description

### TECHNICAL FIELD OF THE INVENTION

The present invention regards a modular bag for bicycles and similar vehicles.

More particularly, the present invention regards a modular bag for bicycles, adapted to removably house at its interior a further bag or second component.

### STATE OF THE PRIOR ART

Bicycles or similar vehicles can be provided with bags, e.g. lateral, which are fixed to the frame of the bicycle, especially to the rear rack and/or to the front rack.

The lateral bags are connected to the tube of the rack and have, for such purpose, at least one pair of upper clasps, such as mechanical clip systems, which support the entire weight of the bag itself, and possibly also a lower pin, which is coupled to a vertical bracket of the frame, at the wheel of the bicycle. The lower pin allows maintaining the bag in position, without moving it during use.

Known bicycle bags mainly have the following drawbacks: The mechanical clip system is rather complex and subjected to breakage, e.g. caused by the vibrations generated during pedaling. Since such clasps must support the entire weight of the bags, they cannot be subjected to breakage. Simultaneously, since they must be removable, it is necessary to find the right compromise between strength and ease of mounting/dismounting by the user. In addition, when the bag is removed from the bicycle, and hence moved by the user, the relative attachment is exposed to further breakage risks.

Another disadvantage of the bicycle bags of known type is that, during use, they are subjected to getting very dirty, due to the mud or dust with which they come into contact during use. This is a significant drawback, when the cyclist reaches destination and must remove the bag from the frame of the bicycle, so as to bring it with him/her into the desired location (whether into home or for example in the tent in the case of camping).

Other disadvantages tied to the bags of conventional type are: often they result bulky and their mechanical attachment for the bicycle often adds weight to the bag itself.

There is therefore the need to modify the system of attachment/detachment of the bag to the frame of the bicycle, so as to improve the use of such bags during pedaling, as well as the need to have an easily removable system, so as to increase the possibilities of use of the bags themselves.

The document US 2010/147918 A1 shows a bag for a bicycle according the preamble of claim 1.

### OBJECTS OF THE INVENTION

The technical task of the present invention is therefore that of improving the state of the art.

In the context of such technical task, one object of the present invention is to implement a modular bag for bicycles and the like having optimal strength characteristics, as well as the ability to facilitate its mounting and/or dismounting from the frame of the bicycle and the like.

Still another object of the present invention is to make a modular bag for bicycles and the like which is versatile from the standpoint of use by a cyclist.

Such task and such objects are all attained by the modular bag for bicycles and the like according to the enclosed claim 1.

The dependent claims refer to preferred and advantageous embodiments of the invention.

### BRIEF DESCRIPTION OF THE DRAWINGS

The characteristics of the invention will be better understood by every man skilled in the art from the following description and from the enclosed drawings tables, given as a non-limiting example, in which:
figure 1 is a side view of a bicycle provided with two lateral bags according to the present invention;
figure 2 is a front perspective view of a first component of the bag according to the present invention;
figure 3 is a front perspective view of a bag assembled according to the present invention;
figure 4 is a front perspective view in a first operative configuration of the bag according to the present invention;
figure 5A is a rear perspective view of a second component of a bag according to the present invention;
figure 5B is a further version of the second component pursuant to figure 5A;
figure 6 is a front perspective view of one version of a first component according to the present version, in a first operative position;
figure 7 is a front perspective view of the second component pursuant to figure 6;
figures 8A, 8B, 8C illustrate rear perspective views of the three operative steps of the second component according to the present invention;
figure 9 is a front perspective view of one version of the bag according to the present invention;
figure 10 is a front perspective view of one version of the bag according to the present invention;
figure 11 is a rear perspective view of a second component of the bag according to one version of the present invention;
figures 12 and 13 illustrate enlarged details of the second component pursuant to figure 11.

### EMBODIMENTS OF THE INVENTION

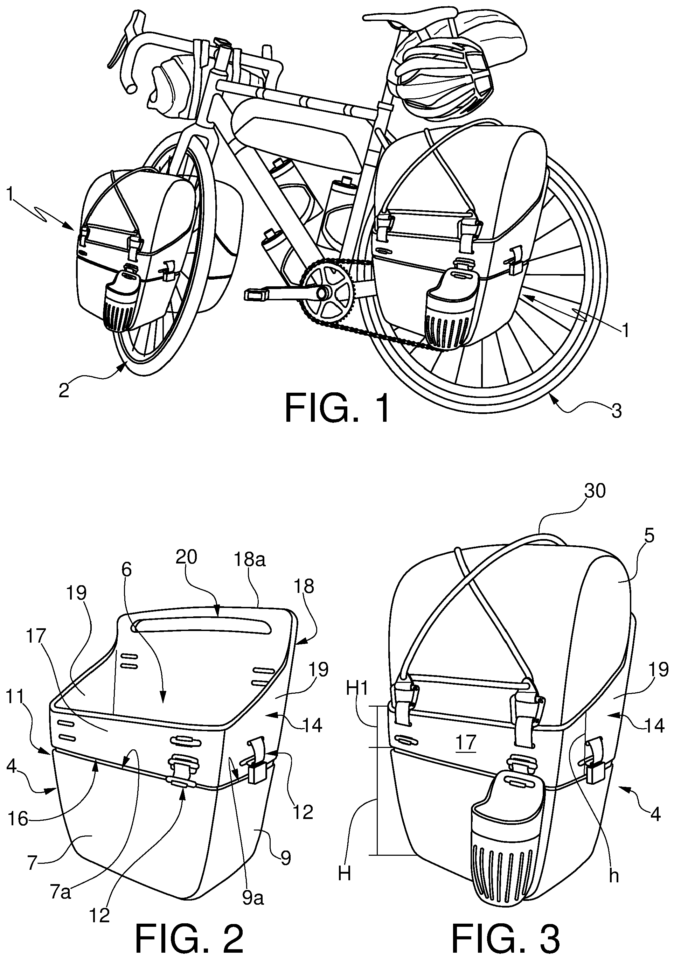

With reference to the enclosed figure 1, reference number 1 overall indicates a bag for bicycles and similar vehicles according to the present invention, adapted to be constrained to the frame of the bicycle and/or to the rear rack and/or to the front rack and/or to the handlebar and/or to at least one bar of the frame of the bicycle. In particular, in figure 1, a first bag 1 is illustrated, positioned laterally with respect to the bicycle, at a front wheel 2 of a bicycle and a second bag 1 is illustrated laterally positioned at a rear wheel 3 of a bicycle.

The bag 1 according to the present invention consists of a first component 4 and of a second component 5.

In such a manner, the present invention regards a modular bag 1, capable of being adapted to a great number of requirements and situations, according to the desires and tastes of the user. In addition, the bag 1 is modular also due to the fact that the first component 4 and the second component 5 could also be used separately, depending on the versions and on the requirements.

The bag 1 according to the present invention can be a lateral bag, i.e. positioned along a side of a bicycle or of a similar vehicle, or a front bag, e.g. when positioned at the handlebar of the bicycle or of the similar vehicle, or a rear bag, when positioned at the rear zone of the bicycle or of the similar vehicle.

In particular, the first component 4 comprises a support container, which is adapted to be constrained, possibly removably, to a frame of the bicycle or the like, in particular to the front rack and/or rear rack of the bicycle and/or to the handlebar and/or to at least one bar of the frame (e.g. to one of the substantially vertical connection bars for the front wheel 2 (e.g. the fork of the bicycle) and/or for the rear wheel 3).

The first component or support container 4 can have a substantially parallelepiped shape; it is provided with an opening 6 (e.g. an upper face thereof in the parallelepiped configuration) adapted to allow the housing of the second component 5. In one version of the invention, the opening 6 is adapted to allow the housing in the first container or support container 4 of the objects to be transported, also in the absence of the second component 5.

In an alternative version, the first component 4 can have a substantially cylindrical shape, with its upper base including the opening 6, or it can have a substantially semi-spherical or semi-ellipsoid shape.

In each case, for the first component or support container 4 it is possible to identify at least one front surface or face 7, adapted during use to be directed outward with respect to the frame of the bicycle, e.g. substantially parallel to a greater extension of the front wheel 2 and/or of the rear wheel 3, a rear surface or face 8, adapted during use to come into contact and/or be constrained with the frame of the bicycle, at least one lateral surface or face 9 and a lower base 10. In particular, there can be two lateral faces or surfaces 9.

The lower base 10 is opposite the opening 6.

In at least one version of the invention, the rear and front faces or surfaces 7, 8 and/or the lateral faces or surfaces 9 are substantially parallel to each other.

In addition, the lateral openings or faces 9 are substantially perpendicular to the front 7 and rear 8 surfaces or faces.

The dimensions respectively of the rear and front faces or surfaces 7, 8 and/or of the lateral faces or surfaces 9 can be the same or they can be different from each other.

The various surfaces or faces 7, 8, 9, and the lower base 10 are made in a manner such to be joined together so as to determine a single internal space - which is accessed from the opening 6, so as to at least partially house the second component 5 and/or the objects to be transported.

According to the present invention the first component or support container 4 is made of at least two pieces.

The first component or support container 4 has the front face or surface 7, the rear face or surface 8, the lateral faces or surfaces 9 all substantially having the same height H (with respect to the lower base 10).

In such a manner, their edges of respective ends 7a, 8a, 9a form a single and/or upper perimeter 11 lying on a plane substantially parallel to the ground.

All this forms the first portion of the first component or support container 4.

From such perimeter 11, the second portion 14 of the first component or support container 4 departs, possibly in a removable manner; the second portion 14 is positioned above the first portion of the first component or support container 4.

Analogous to that indicated above, the second portion 14 comprises a substantially parallelepiped shape and/or a substantially cylindrical or tubular shape.

In particular, the second portion 14 has on the lower part an opening which coincides with the opening determined by the perimeter 11, on the upper part the opening 6, and a front wall 17, a rear wall 18 and at least one lateral wall 19 can be identified therein.

The edges of lower ends 17a, 18a, 19a respectively of the walls 17, 18, 19 coincide (which form a lower peripheral edge 16 of the second portion 14) and/or are adapted to come into contact respectively with the edges of upper ends 7a, 8a, 9a and/or with the perimeter 11.

In order to constrain the first portion and the second portion 14 of the first component or support container 4 to each other, in a removable but secure manner, coupling means 12 can be present, for example in the form of clips or elastic bands or clasps by pressure, or by fitting, or by interference, etcetera.

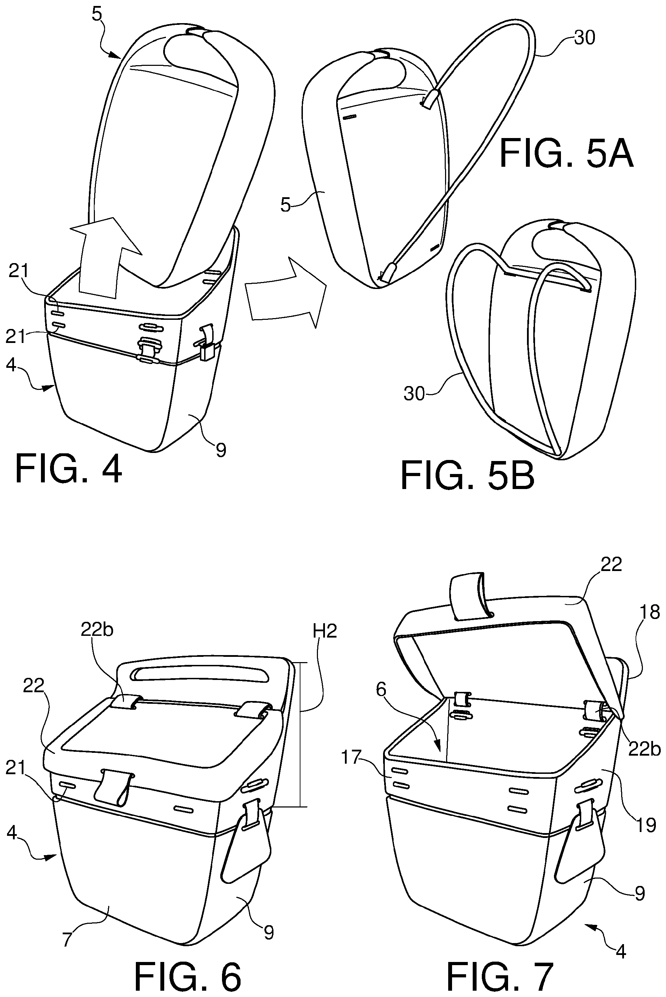

At least one accessory can be further applied to such coupling means 12, such as a bottle holder (illustrated in figure 3), a reflective means (illustrated in figures 6, 7), a light, etcetera.

The fixing of the at least one accessory can be determined by the presence of a suitable slit in the latter and of a corresponding tongue present in the first component 4 (or vice versa) and/or one or the other present at the coupling means 12, or by means of similar coupling means.

The coupling means 12 can be positioned for example at the front wall 17 in order to be connected to the surface or face 7, and/or at the lateral wall 19, in order to be connected to the lateral face or surface 9, etcetera.

The walls 17, 18, 19 of the second portion 14 can all have the same height or they can have different height.

For example, in the version illustrated in figures 2 and 3, the front wall 17 has a first height H1, the rear wall 18 has a second height H2 (with respect to the perimeter 11 and/or to the lower perimeter 16), in which H2 is greater than H1.

The lateral walls 19 have a height h progressing from H1 to H2, since they act as connection between the front wall 17 and the rear wall 18.

At the highest zone, highest during use, of the rear wall 18 it is possible to provide for a handle 20, adapted to be gripped by a user in order to position and/or remove the first component or support container 4.

The handle 20, in one version of the invention, is attained by making a through transverse slit along the edge of upper end 18a of the rear wall 18 (such slit for example parallel to the ground). Such handle 20 and/or slit can be shaped in an ergonomic manner and/or padded with a suitable material, so as to improve the gripping comfort for the user.

The handle 20, if the rear wall 18 has the same height H2 with respect to the height H1 of the front wall 17, can still be present and be positioned at least at an upper zone, upper during use, of the rear wall 18.

Alternatively, the handle 20 can be positioned at a zone that during use is an upper zone of the front wall 17 and/or of the lateral walls 19, alternatively or in combination with the possible handle 20 present in the rear wall 18.

Since the first portion and the second portion 14 of the first component 4 are constrained to each other by means of the coupling means 12, possible movements (mounting/dismounting) of the support container 4 occur as if it was actually made of only one piece.

The material constituting the first component 4 can be a plastic material, carbon material, a fabric, e.g. knitted, a non-woven fabric, etcetera. The material is also possibly light, strong and/or durable. Such material must be rigid, i.e. adapted to give structure to the first component 4 so as to support the weight of the objects to be transported. In addition, such material is preferably impermeable to water and/or easily cleanable, so as to eliminate the dirt that can be accumulated on the same while pedaling and/or comprising a treatment adapted to render it water repellent, stain resistant, abrasion resistant, etcetera.

The first component or support container 4 can have, in at least one zone thereof, at least one slit 21. Such at least one slit 21 usually has a longitudinal progression that is substantially horizontal or parallel to the ground.

Such at least one slit 21 has a length usually comprised between 2 and 4 cm.

Such at least one slit 21 is adapted to constrain other components or components in addition to the support container 4, e.g. by means of small bands, buckles, or similar fixing means.

In some positions or depending on a specific version, such at least one slit 21 is actually two slits, in which the two slits 21 are positioned one on top of the other, spaced by a space of about 0.5 - 2 cm. Thus, it is possible to constrain a small band, a buckle or similar means to such two slits 21 in an even more secure manner.

In a further version, the first component or support container 4 can have a cover 22. Such at least one cover 22 is during use adapted to close the opening 6 of the support container 4, for example according to particular use conditions or depending on the requirements of the user.

Such cover 22 has a shape substantially corresponding to that of the opening 6, possibly provided with a lateral edge 22a in order to better close the support container 4.

Such cover 22 can be fixed to the rear wall 18 of the second portion 14 (at a certain distance from the possible handle 20) if present or to the rear face or surface 8 of the support container 4, by means of bands or buckles or by means of suitable hinge means 22b, possibly removable.

The first component or support container 4 is fixed to the frame of the bicycle, such as for example the rear rack and/or front rack and/or to a bar of the frame, by means of connection means 25.

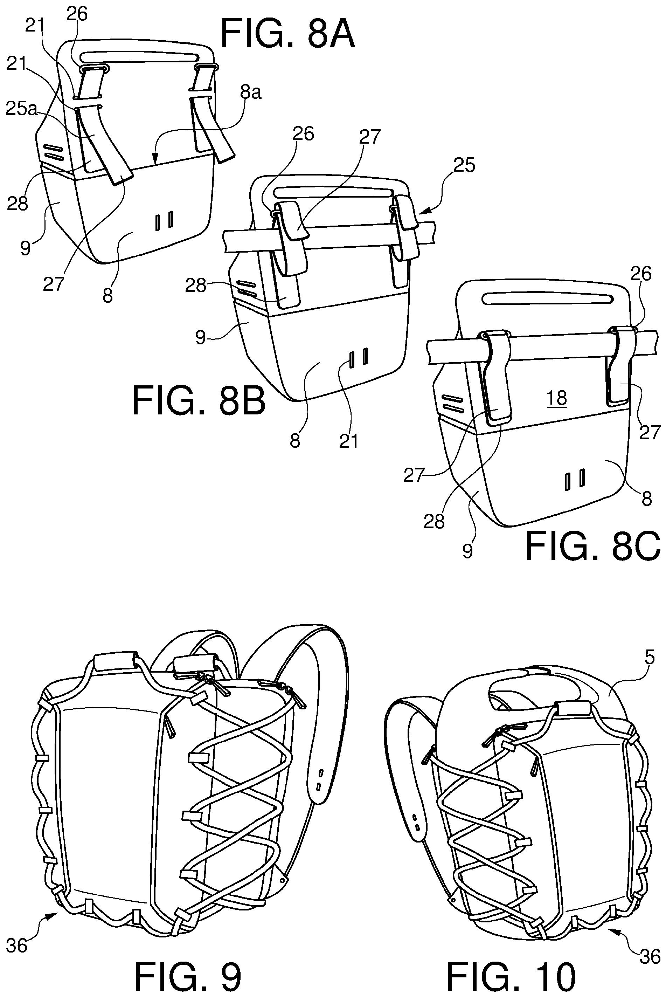

The connection means 25, for example in the versions illustrated in figures 8A-8C, are connection means lacking mechanical adjustment means.

The connection means 25 are generally placed at the upper zone, upper during use, of said rear surface or face 8 and/or of the rear wall 18 of the first component or support container 4.

In the version illustrated in the indicated figures, there are two connection means 25, in right and left lateral positions during use, and they each comprise a band 25a which is inserted within two slits 21 so as to project, with both ends 26, 27 thereof, to the rear of the support container 4, towards the frame of the bicycle.

There may also be only one connection means 25, possibly positioned in central position of the first component 4, so as to support the latter in a balanced manner, and securely constrain it to the frame of the bicycle. Additionally, there can also be more than two connection means 25.

The ends 26, 27 of the band 25a can have strap and/or hook and loop closure elements, such as those known with the commercial name Velcro. Alternatively, the ends 26, 27 of the band 25a can have adhesive means for the connection of a first end 26 at the second end 27.

In addition, it is possible that a first end 26 of the band 25a can have an annular buckle, possibly flattened so as to take on a substantially rectangular or oval shape, with length equal to about the width of the band 25a.

In such buckle, it is possible to pass the second end 27 of the band 25a such that the latter encloses a bar of the rack and/or of the handlebar and/or of the frame of the bicycle.

Such second end 27 can then be folded on itself (and pulled so as to tightly enclose the bar of the frame of the bicycle) in order to then be connected to the rear wall 18 and/or to the rear surface or face 8 of the support container 4, in an area 28 covered by an adhesive element or by one of the two strap and/or hook and loop connection systems, such as those known with the commercial name Velcro, in particular the other with respect to that present at the end 27 of the band 25a.

In each case, the connection means 25 are of removable type since the support container 4 can be constrained to or released from the frame of the bicycle.

The present invention hence also refers to a method for removably connecting a bag for bicycles and similar vehicles according to the present invention, adapted during use to be removably constrained to the frame of the bicycle and/or to the rear rack and/or to the front rack and/or to the handlebar and/or to at least one bar of the frame of the bicycle, comprising the steps of providing a first component 4, in which the first component 4 comprises a support container provided with an opening 6, wherein said first component 4 is composed of at least one frontal surface or face 7, adapted during use to be directed towards the exterior with respect to the frame of the bicycle, a rear surface or face 8, adapted during use to come into contact with and /or to be constrained with the frame of the bicycle and substantially parallel to said frontal surface or face 7, at least one lateral surface or face 9 and a lower base 10, opposite said opening 6, wherein said first component 4 is made of at least two pieces and comprises at least one first portion formed by said front 7, rear 8 and lateral 9 surfaces or faces and a second portion 14 positioned above said first portion, having a substantially parallelepiped shape and/or substantially cylindrical or tubular shape, and providing at least one removable connection means 25 comprising at least one band 25a provided with at least one strap and/or hook and loop closure element, connecting the at least one connection means 25 to the first component 4, removably constraining, during use, the first component 4 to the frame of the bicycle and/or to the rear rack and/or to the front rack and/or to the handlebar and/or to at least one bar of the frame of the bicycle by means of the at least one connection means 25, providing a second component 5 in the form of a sack, backpack or bag and at least partially housing said second component 5 in said first component 4 by means of said opening 6 present in the same, wherein said second component 5 is removably constrained to said support container 4 by means of an elastic cord or band 30 which is fixed by means of buckles, and/or bands and/or by means of slits 21 to said support container 4.

The method then provides for a step of supplying at least the band 25a provided with a first end 26 and with a second end 27, in which the first end 26 is provided with an annular buckle, possibly flattened so as to take on a substantially rectangular or oval shape, with length equal to about the width of the band 25a, passing the second end 27 within at least one slit 21 present in the first container 4, optionally in two slits 21, in a manner such that both the first end 26 and the second end 27 are directed towards the bicycle or similar vehicle, passing the second end 27 of the at least one band 25a around at least one bar of the frame of the bicycle and/or of the rear rack and/or of the front rack and/or of the handlebar so as to enclose the at least one bar, passing the second end 27 within the buckle present in the first end 26 and tightening such that the at least one band 25a is tightened around the at least one bar,
folding the second end 27 on itself such that the at least one strap and/or hook and loop closure element is removably connected to the rear wall 18 and/or rear surface or face 8 of the support container 4, in an area 28 covered by an adhesive element or by a means corresponding to the at least one strap and/or hook and loop closure element, with respect to that present at the second end 27.

If the support container 4 has, according to one version of the invention, a size such to come into contact with the zone relative to the hub of the wheel 2, 3 of the bicycle, it is possible that connection means 25 be provided for also in this zone. Alternatively, at the zone of the hub of the wheel 2, 3, different connection means can be provided for, depending on the requirements.

The strap and/or hook and loop connection means 25 are very simple but simultaneously strong and therefore better than a mechanical attachment, since they are also light, hard to damage and easier to repair in case of problems or damage that could occur.

As stated above, the bag 1 according to the present invention also consists of a second component 5, for example illustrated in several possible versions thereof in figures 9 to 13.

The second component 5 is in the form of a sack, backpack or bag, preferably made of water-resistant and dirt-resistant material, which during use can be removably housed within the first component or support container 4 so as to be transported during pedaling.

According to the present invention, such second component 5 is constrained, in a removable manner, to the support container 4, for example as a visible in figure 3, in which an elastic cord or band 30 is present which is fixed e.g. by means of buckles, and/or bands and/or the slits 21 to the support container 4. Also in figures 4, 5A and 5B, the second component 5 is visible which is extracted from the first component 4, e.g. when the user has reached his/her destination, and hence wishes to remove the second component 5 and bring it with him/her, for example to the campsite, or when he/she must remove the second component 5 from the first component 4.

In such case, the elastic cord or band 30, first used for fixing in position the second component 5 with the first component 4, can be made to pass into suitable loops or the like present in the back or in the rear part of the second component 5, so as to transform the elastic cord or band 30 into one or two bands that can be worn around the shoulders of the user, in the classic backpack or bag manner.

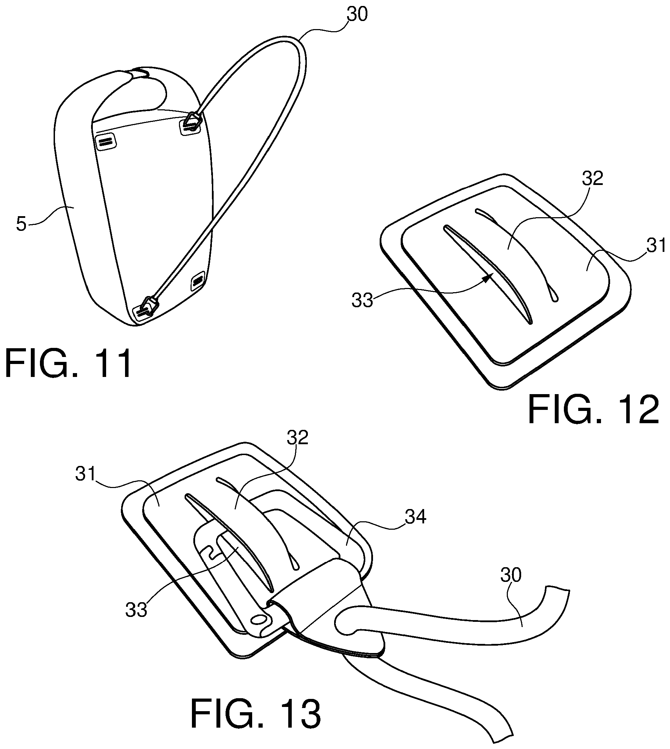

Illustrated in more detail in figures 11-13 is such fixing of the elastic cord or band 30 in the rear part of the second component 5, and such loops - at whose interior the elastic band 30 is made to pass - can be shaped as illustrated in figure 12. For example, such loops or the like can be constituted by a plate 31 which is fixed to the fabric or to the material of the second component 5 and provided with a bridge-like protrusion 32 which determines a through opening 33 between plate 31 and bridge-like protrusion 32. Such through opening 33 allows fixing a buckle 34 to the bridge-like protrusion 32, which is in turn fixed to the elastic cord or band 30 by means of modes of known type.

Alternatively or additionally, the second component 5, once extracted from the first component 4 in order to be transported by the user, can be inserted in an external casing 36, illustrated in figures 9 and 10. The external casing can be provided with backs or shoulder straps, possibly padded, as in a conventional backpack, or other expedients useful for the user depending on the specific needs.

According to further versions of the invention, as stated above, the first component 4 can be used by the user even without the second component 5 and vice versa the second component 5 can also be used as a bag or backpack, independent of the first container 4, for example in association with the external casing 36.

Both the first component 4 and the second component 5 are in fact adapted to contain objects and/or loads, which the user intends to transport.

In addition, since many cyclists use the same bicycle both for journeys and for moving for example within a city, it is possible to not remove the bag 1 even when the user is stopped. The first container 4 can act as a small basket, also for daily use of the bicycle, increasing the travel comfort of the user even for brief city transfers.

It follows that the bag 1, along with its first component 4 and second component 5, determines a modular system. In particular, the first component 4 can be used in combination or not in combination with the second component 5 and the latter can also be used on its own or in combination with the external casing 36 and/or with other containers with different function.

Therefore, the present invention also regards a kit comprising a bag 1 according to the present invention, comprising a first component 4, a second component 5 in the form of a sack, backpack or bag and an external casing 36, in which the second component 5 is adapted to be at least partially housed in the first component 4 or in the external casing 36 when the second component 5 is extracted from the first component 4, such that it can be transported by the user, and wherein said second component 5 is removably constrained to said first component 4.

It has therefore been seen that the bag 1 according to the present invention is modular, durable over time and adapted to any use condition.

Finally, the present invention also relates to a bicycle or similar vehicle comprising at least one bag 1 according to the preceding description.

The present invention has been described according to preferred embodiments, but equivalent variants can also be conceived without departing from the scope offered by the following claims.

## Claims

1. Bag for a bicycle or a similar vehicle, adapted during use to be removably constrained to at least one bar of a frame of the bicycle or of the similar vehicle and/or to a rear rack and/or to a front rack and/or to a handlebar of the bicycle or of the similar vehicle, wherein said bag (1) comprises a first component (4), wherein said first component (4) comprises a support container provided with an opening (6), wherein said first component (4) is composed of at least one frontal surface or face (7), adapted during use to be directed towards the exterior with respect to the frame of the bicycle, a rear surface or face (8), adapted during use to come into contact with and/or to be constrained with the frame of the bicycle and substantially parallel to said frontal surface or face (7), at least one lateral surface or face (9) and a lower base (10), opposite said opening (6),
wherein said first component (4) is made of at least two pieces and comprises at least one first portion formed by said front (7), rear (8) and lateral (9) surfaces or faces and a second portion (14) positioned above said first portion, having a substantially parallelepiped shape and/or substantially cylindrical or tubular shape, wherein said first component (4) has at least one removable connection means (25) comprising at least one band (25a) provided with at least one strap and/or hook and loop closure element, for removably constraining during use said first component (4) to the at least one bar of the frame of the bicycle or of the similar vehicle and/or of the rear rack and/or of the front rack and/or of the handlebar of the bicycle or of the similar vehicle **characterized in that** said bag (1) comprises a second component (5), in the form of a sack, backpack or bag, adapted to be at least partially housed, in a removable manner, in said first component (4) through said opening (6), **and in that** said second component (5) is removably constrained to said support container (4) by means of an elastic cord or band (30) which is fixed by means of buckles, and/or bands and/or by means of slits (21) to said support container (4).

2. Bag according to claim 1, wherein said at least one frontal surface or face (7) is substantially parallel to a greater extension of a front wheel (2) and/or rear wheel (3).

3. Bag according to claim 2, wherein said frontal and rear surfaces or faces (7, 8) and/or said lateral surfaces or faces (9) have a same size and/or a same height (H), and/or wherein said front surface or face (7), said rear surface or face (8), said lateral surfaces or faces (9) respectively have an end edge (7a, 8a, 9a) which forms a single and/or upper perimeter (11) and lying on a plane substantially parallel to the ground.

4. Bag according to any one of the preceding claims, wherein said second portion (14) comprises a frontal wall (17) provided with a lower end edge (17a), a rear wall (18) provided with a lower end edge (18a) and at least one lateral wall (19) provided with a lower end edge (19a), as well as a lower opening delimited by said lower end edges (17a, 18a, 19a) and/or by a lower peripheral edge (16) formed by said lower end edges (17a, 18a, 19a) and, on the upper part, said opening (6), wherein said lower perimeter (16) is adapted to come into contact with said perimeter (11), and/or wherein said second portion (14) departs, possibly in a removable manner, from said perimeter (11) of said first portion and/or is constrained, possibly in a removable manner, to said first portion by means of coupling means (12), for example in the form of elastic bands or clips or hooks by pressure, or by fitting or by interference, etcetera.

5. Bag according to the preceding claim, comprising at least one accessory, such as for example a water bottle holder, a reflecting means, a light, etcetera, wherein said at least one accessory is coupled to said coupling means (12) and/or wherein said coupling means (12) are positioned at said frontal wall (17) in order to be coupled to said surface or face (7), and/or at said lateral wall (19) in order to be coupled to said lateral surface or face (9), and/or at said rear wall (18) in order to be coupled to said rear surface or face (8).

6. Bag according to any one of the preceding claims, wherein said first component (4) has a substantially parallelepiped shape or a substantially cylindrical shape or a substantially semi-spherical shape or semi-ellipsoid shape, and/or a shape adapted to determine an internal space, open by means of said opening (6), for at least partially housing of said second component (5) and/or wherein said first component (4) comprises said at least one slit (21) usually with a longitudinal progression that is substantially horizontal or parallel to the ground, and/or comprises said at least one slit (21) with a length comprised between 2 cm and 4 cm and/or adapted to constrain further components to said first component (4), for example by means of clips, buckles, or similar fixing means, and/or wherein two of said slits (21) are present, one positioned on top of the other, spaced by a space of about 0.5 cm - 2 cm.

7. Bag according to any one of the preceding claims, wherein said at least one connection means (25) is placed at a zone, upper during use, of said rear surface or face (8) and/or of said rear wall (18) of said first component (4), in right or left lateral position during use or central, and/or wherein said at least one band (25a) is inserted within one or two of said slits (21) so as to project, with both ends (26, 27) thereof, behind said first component (4), towards the frame of the bicycle or similar vehicle, such to be able to constrain said first component (4) to the bicycle or similar vehicle, and/or wherein said at least one band (25a) comprises two ends (26, 27) which have said at least one strap and/or hook and loop closure element, or adhesive means for connecting a first end (26) at the second end (27), and/or wherein said at least one band (25a) comprises a first end (26) provided with an annular buckle, possibly flattened so as to take on a substantially rectangular or oval shape, with length equal to about the width of said band (25a), wherein said buckle is adapted to allow the passage of a second end (27) of said at least one band (25a), in a manner such that the latter encloses a bar of the rack and/or of the frame of the bicycle.

8. Bag according to any one of the preceding claims when dependent on claim 4, wherein said frontal wall (17) has a first height (H1), said rear wall (18) has a second height (H2) with respect to said lower perimeter (16), wherein (H2) is greater than (H1), and said lateral walls (19) have a height (h) progressing from (H1) to (H2), since they act as a connection between frontal wall (17) and rear wall (18), and/or wherein at a higher zone during use or at an upper zone of said rear wall (18) and/or at an upper end edge (18a) of said rear wall (18), a handle (20) is present that is adapted to be gripped by a user in order to position and/or remove said first component (4).

9. Bag according to the preceding claim, wherein said handle (20) comprises or is determined by a transverse through slit, for example parallel to the ground, and/or is shaped in an ergonomic manner and/or padded with a suitable material, so as to improve the gripping comfort by the user.

10. Bag according to any one of the preceding claims, wherein said first component (4) is made of a plastic material, carbon, a fabric, e.g. knitted, a nonwoven fabric, etcetera., possibly light, and/or of a rigid material and/or resistant material and/or durable material and/or waterproof material, and/or cleanable material, and/or comprising a treatment adapted to render it water repellent, stain resistant, abrasion resistant, etcetera.

11. Bag according to any one of the preceding claims, wherein said first component (4) comprises a cover (22) adapted during use to close said opening (6), wherein said cover (22) has a shape substantially corresponding to that of said opening (6), possibly provided with a lateral edge (22a) in order to improve the closure of said first component (4), and/or wherein said cover (22) is fixed to said rear wall (18) of said second portion (14) or to said rear surface or face (8) of said first component (4) by means of bands or buckles or by means of suitable hinge means (22b), possibly removable.

12. Method for removably connecting a bag for a bicycle or a similar vehicle according to any one of the preceding claims, adapted during use to be removably constrained to at least one bar of a frame of the bicycle or of the similar vehicle and/or of the rear rack and/or of the front rack and/or of the handlebar, comprising the following steps:
providing a first component (4), wherein said first component (4) comprises a support container provided with an opening (6), wherein said first component (4) is composed of at least one frontal surface or face (7), adapted during use to be directed towards the exterior with respect to the frame of the bicycle, a rear surface or face (8), adapted during use to come into contact with and/or to be constrained with the frame of the bicycle and substantially parallel to said frontal surface or face (7), at least one lateral surface or face (9) and a lower base (10), opposite said opening (6), wherein said first component (4) is made of at least two pieces and comprises at least one first portion formed by said front (7), rear (8) and lateral (9) surfaces or faces and a second portion (14) positioned above said first portion, having a substantially parallelepiped shape and/or substantially cylindrical or tubular shape, and
providing at least one removable connection means (25) comprising at least one band (25a) provided with at least one strap and/or hook and loop closure element,
connecting said at least one connection means (25) to said first component (4),
removably constraining during use said first component (4) to the at least one bar of a frame of the bicycle or of the similar vehicle and/or of the rear rack and/or of the front rack and/or of the handlebar by means of said at least one connection means (25),
providing a second component (5) in the form of a sack, backpack or bag and at least partially housing said second component (5) in said first component (4) by means of said opening (6) present in the same, wherein said second component (5) is removably constrained to said support container (4) by means of an elastic cord or band (30) which is fixed by means of buckles, and/or bands and/or by means of slits (21) to said support container (4).

13. Method according to claim 12, wherein said step of providing at least one connection means (25) comprises providing said at least one band (25a) provided with a first end (26) and with a second end (27), wherein said first end (26) is provided with an annular buckle, possibly flattened so as to take on a substantially rectangular or oval shape, with length equal to about the width of said band (25a),
passing said second end (27) within at least one slit (21) present in said first container (4), optional within two slits (21), in a manner such that both said first end (26) and said second end (27) are directed towards said bicycle or similar vehicle,
passing said second end (27) of said at least one band (25a) around at least one bar of the frame of the bicycle and/or of the rear rack and/or of the front rack and/or of the handlebar so as to enclose said at least one bar,
passing said second end (27) within said buckle present in said first end (26) and tightening such that said at least one band (25a) is tightened around said at least one bar,
folding said second end (27) on itself such that said at least one strap and/or hook and loop closure element is removably connected to said rear wall (18) and/or rear surface or face (8) of said support container (4), in an area (28) covered by an adhesive element or by a means corresponding to said at least one strap and/or hook and loop closure element, with respect to that present at said second end (27).

14. Bicycle or similar vehicle, comprising at least one bag (1) according to any one of the claims 1 to 11.

15. Kit comprising a bag (1) according to any one of the claims 1 to 11, comprising a first component (4), a second component (5) in the form of a sack, backpack or bag and possibly an external casing (36), wherein said second component (5) is adapted to be at least partially housed in said first component (4) or in said external casing (36), such to be able to be transported by the user, and wherein said second component (5) is removably constrained to said first component (4).

## Patentansprüche

1. Tasche für ein Fahrrad oder ein ähnliches Fahrzeug, die im Gebrauch dazu ausgelegt ist, lösbar an mindestens einer Stange eines Rahmens des Fahrrads oder des ähnlichen Fahrzeugs und/oder an einem Heckgepäckträger und/oder an einem Frontgepäckträger und/oder an einem Lenker des Fahrrads oder des ähnlichen Fahrzeugs festgehalten zu werden, worin die besagte Tasche (1) eine erste Komponente (4) umfasst, worin die besagte erste Komponente (4) einen mit einer Öffnung (6) versehenen Trägerbehälter umfasst, worin die besagte erste Komponente (4) aus mindestens einer vorderen Oberfläche oder Fläche (7), die im Gebrauch dazu ausgelegt ist, in Bezug auf den Rahmen des Fahrrads nach außen gerichtet zu werden, einer hinteren Oberfläche oder Fläche (8), die im Gebrauch dazu ausgelegt ist, mit dem Rahmen des Fahrrads in Kontakt zu kommen und/oder an diesem festgehalten zu werden und im Wesentlichen parallel zu der besagten vorderen Oberfläche oder Fläche (7) verläuft, mindestens einer seitlichen Oberfläche oder Fläche (9) und einer unteren Basis (10), gegenüber der besagten Öffnung (6), besteht,
worin die besagte erste Komponente (4) aus mindestens zwei Teilen besteht und mindestens einen ersten Abschnitt, der durch die besagte(n) vordere (7), hintere (8) und seitlichen (9) Oberfläche(n) oder Fläche(n) gebildet wird, und einen zweiten Abschnitt (14), der über dem besagten ersten Abschnitt angeordnet ist, umfasst, mit einer im Wesentlichen parallelepipedischen Form und/oder einer im Wesentlichen zylindrischen oder röhrenförmigen Form, worin die besagte erste Komponente (4) mindestens ein lösbares Verbindungsmittel (25) aufweist, das mindestens ein Band (25a) umfasst, das mit mindestens einem Riemen- und/oder Klettverschlusselement versehen ist, um die besagte erste Komponente (4) im Gebrauch an der mindestens einen Stange des Rahmens des Fahrrads oder des ähnlichen Fahrzeugs und/oder des Heckgepäckträgers und/oder des Frontgepäckträgers und/oder des Lenkers des Fahrrads oder des ähnlichen Fahrzeugs lösbar festzuhalten, **dadurch gekennzeichnet, dass** die besagte Tasche (1) eine zweite Komponente (5), in Form eines Sacks, Rucksacks oder einer Tasche, umfasst, die dazu ausgelegt ist, mindestens teilweise, in lösbarer Weise, in der besagten ersten Komponente (4) durch die besagte Öffnung (6) untergebracht zu werden, und dadurch, dass die besagte zweite Komponente (5) an dem besagten Trägerbehälter (4) mittels einer elastischen Schnur oder eines elastischen Bands (30), die/das mittels Schnallen und/oder Bändern und/oder mittels Schlitzen (21) an dem besagten Trägerbehälter (4) befestigt ist, lösbar festgehalten ist.

2. Tasche nach Anspruch 1, worin die besagte mindestens eine vordere Oberfläche oder Fläche (7) im Wesentlichen parallel zu einer größeren Erstreckung eines Vorderrads (2) und/oder Hinterrads (3) verläuft.

3. Tasche nach Anspruch 2, worin die besagte vordere und hintere Oberfläche oder Fläche (7, 8) und/oder die besagten seitlichen Oberflächen oder Flächen (9) eine gleiche Größe und/oder eine gleiche Höhe (H) aufweisen, und/oder worin die besagte vordere Oberfläche oder Fläche (7), die besagte hintere Oberfläche oder Fläche (8) die besagten seitlichen Oberflächen oder Flächen (9) jeweils eine Endkante (7a, 8a, 9a) aufweisen, die einen einzigen und/oder oberen Umfang (11) bildet und in einer Ebene liegt, die im Wesentlichen parallel zum Boden verläuft.

4. Tasche nach irgendeinem der vorangegangenen Ansprüche, worin der besagte zweite Abschnitt (14) eine vordere Wand (17), versehen mit einer unteren Endkante (17a), eine hintere Wand (18), versehen mit einer unteren Endkante (18a), und mindestens eine seitliche Wand (19), versehen mit einer unteren Endkante (19a), sowie eine untere Öffnung, begrenzt durch die besagten unteren Endkanten (17a, 18a, 19a) und/oder durch eine untere Umfangskante (16), gebildet durch die besagten unteren Endkanten (17a, 18a, 19a), und im oberen Teil, die genannte Öffnung (6), umfasst, worin der besagte untere Umfang (16) dazu ausgelegt ist, mit dem besagten Umfang (11) in Kontakt zu kommen, und/oder worin der besagte zweite Abschnitt (14), möglicherweise in lösbarer Weise, von dem besagten Umfang (11) des besagten ersten Abschnitts ausgeht und/oder, möglicherweise in lösbarer Weise, mittels Verbindungsmitteln (12), zum Beispiel in Form von elastischen Bändern oder Klammern oder Haken durch Druck oder durch Einpassen oder durch Eingriff usw., an dem besagten ersten Abschnitt festgehalten wird.

5. Tasche nach dem vorangegangenen Anspruch, umfassend mindestens ein Zubehörteil, wie zum Beispiel einen Wasserflaschenhalter, ein reflektierendes Mittel, eine Leuchte usw., worin das besagte mindestens eine Zubehörteil mit den besagten Verbindungsmitteln (12) verbunden ist und/oder worin die besagten Verbindungsmittel (12) an der besagten vorderen Wand (17) angeordnet sind, um mit der besagten Oberfläche oder Fläche (7) verbunden zu werden, und/oder an der besagten seitlichen Wand (19), um mit der besagten seitlichen Oberfläche oder Fläche (9) verbunden zu werden, und/oder an der besagten hinteren Wand (18), um mit der besagten hinteren Oberfläche oder Fläche (8) verbunden zu werden.

6. Tasche nach irgendeinem der vorangegangenen Ansprüche, worin die besagte erste Komponente (4) eine im Wesentlichen parallelepipedischen Form aufweist oder eine im Wesentlichen zylindrische Form oder eine im Wesentlichen halbkugelförmige Form oder eine halbellipsoide Form und/oder eine Form, die dazu ausgelegt ist, einen Innenraum zu bilden, der mittels der besagten Öffnung (6) offen ist, zur mindestens teilweisen Unterbringung der besagten zweiten Komponente (5) und/oder worin die besagte erste Komponente (4) den besagten mindestens einen Schlitz (21) umfasst, in der Regel mit einem Verlauf, der im Wesentlichen horizontal oder parallel zum Boden ist, und/oder den besagten mindestens einen Schlitz (21) mit einer Länge zwischen 2 cm und 4 cm umfasst und/oder dazu ausgelegt ist, weitere Komponenten an der besagten ersten Komponente (4) festzuhalten, zum Beispiel mittels Klammern, Schnallen oder ähnlicher Befestigungsmittel, und/oder worin zwei der besagten Schlitze (21), übereinander angeordnet, beabstandet voneinander mit einem Abstand von etwa 0,5 cm - 2 cm, vorhanden sind.

7. Tasche nach irgendeinem der vorangegangenen Ansprüche, worin das besagte mindestens eine Verbindungsmittel (25) in einem Bereich, im Gebrauch oben, der besagten hinteren Oberfläche oder Fläche (8) und/oder der besagten hinteren Wand (18) der besagten ersten Komponente (4), in rechter oder linker seitlicher Position im Gebrauch oder mittig, angeordnet ist, und/oder worin das besagte mindestens eine Band (25a) in einen oder zwei der besagten Schlitze (21) eingeführt ist, um, mit beiden Enden (26, 27) davon, hinter der besagten ersten Komponente (4) in Richtung des Rahmens des Fahrrads oder des ähnlichen Fahrzeugs hervorzuragen, so dass es in der Lage ist, die besagte erste Komponente (4) an dem Fahrrad oder an dem ähnlichen Fahrzeug festzuhalten, und/oder worin das besagte mindestens eine Band (25a) zwei Enden (26, 27) umfasst, die das besagte mindestens eine Riemen- und/oder Klettverschlusselement oder Klebemittel zum Verbinden eines ersten Endes (26) mit dem zweiten Ende (27) aufweisen, und/oder worin das besagte mindestens eine Band (25a) ein erstes Ende (26) umfasst, das mit einer ringförmigen Schnalle versehen ist, die möglicherweise abgeflacht ist, um eine im Wesentlichen rechteckige oder ovale Form anzunehmen, mit einer Länge, die etwa der Breite des besagten Bands (25a) entspricht, worin die besagte Schnalle dazu ausgelegt ist, den Durchgang eines zweiten Endes (27) des besagten mindestens einen Bands (25a) in einer solchen Weise zu ermöglichen, dass letzteres eine Stange des Gepäckträgers und/oder des Rahmens des Fahrrads umschließt.

8. Tasche nach irgendeinem der vorangegangenen Ansprüche, wenn abhängig von Anspruch 4, worin die besagte vordere Wand (17) eine erste Höhe (H1) aufweist, die besagte hintere Wand (18) eine zweite Höhe (H2) in Bezug auf den besagten unteren Umfang (16) aufweist, worin (H2) größer ist als (H1), und die besagten seitlichen Wände (19) eine Höhe (h) aufweisen, die von (H1) zu (H2) verläuft, da sie als Verbindung zwischen der vorderen Wand (17) und der hinteren Wand (18) fungieren, und/oder worin in einem im Gebrauch höher liegenden Bereich oder in einem oberen Bereich der besagten hinteren Wand (18) und/oder an einer oberen Endkante (18a) der besagten hinteren Wand (18) ein Griff (20) vorhanden ist, der dazu ausgelegt ist, von einem Benutzer ergriffen zu werden, um die besagte erste Komponente (4) anzuordnen und/oder zu entfernen.

9. Tasche nach dem vorangegangenen Anspruch, worin der besagte Griff (20) einen queren Durchgangsschlitz, zum Beispiel parallel zum Boden, umfasst und/oder dadurch bestimmt ist und/oder in ergonomischer Weise geformt und/oder mit einem geeigneten Material gepolstert ist, um den Greifkomfort für den Benutzer zu verbessern.

10. Tasche nach irgendeinem der vorangegangenen Ansprüche, worin die besagte erste Komponente (4) aus einem Kunststoffmaterial, Kohlenstoff, einem Gewebe, z. B. einem Strickgewebe, einem Vliesstoff usw., möglicherweise leicht, und/oder aus einem widerstandsfähigen Material und/oder strapazierfähigen Material und/oder wasserdichten Material und/oder reinigbaren Material besteht und/oder eine Behandlung umfasst, die dazu ausgelegt ist, sie wasserabweisend, fleckenbeständig, abriebfest usw. zu machen.

11. Tasche nach irgendeinem der vorangegangenen Ansprüche, worin die besagte erste Komponente (4) eine Abdeckung (22) umfasst, die dazu ausgelegt ist, im Gebrauch die besagte Öffnung (6) zu verschließen, worin die besagte Abdeckung (22) eine Form aufweist, die im Wesentlichen derjenigen der besagten Öffnung (6) entspricht, möglicherweise versehen mit einer seitlichen Kante (22a), um den Verschluss der besagten ersten Komponente (4) zu verbessern, und/oder worin die besagte Abdeckung (22) an der besagten hinteren Wand (18) des besagten zweiten Abschnitts (14) oder an der besagten hinteren Oberfläche oder Fläche (8) der besagten ersten Komponente (4) mittels Bändern oder Schnallen oder mittels geeigneter Scharniermittel (22b), möglicherweise lösbar, befestigt ist.

12. Verfahren zum lösbaren Verbinden einer Tasche für ein Fahrrad oder ein ähnliches Fahrzeug nach irgendeinem der vorangegangenen Ansprüche, die im Gebrauch dazu ausgelegt ist, lösbar an mindestens einer Stange eines Rahmens des Fahrrads oder des ähnlichen Fahrzeugs und/oder des Heckgepäckträgers und/oder des Frontgepäckträgers und/oder des Lenkers festgehalten zu werden, umfassend die folgenden Schritte:
Bereitstellen einer ersten Komponente (4), worin die besagte erste Komponente (4) einen Trägerbehälter, versehen mit einer Öffnung (6), umfasst, worin die besagte erste Komponente (4) aus mindestens einer vorderen Oberfläche oder Fläche (7), die im Gebrauch dazu ausgelegt ist, in Bezug auf den Rahmen des Fahrrads nach außen gerichtet zu werden, einer hinteren Oberfläche oder Fläche (8), die im Gebrauch dazu ausgelegt ist, mit dem Rahmen des Fahrrads in Kontakt zu kommen und/oder an diesem festgehalten zu werden und im Wesentlichen parallel zu der besagten vorderen Oberfläche oder Fläche (7) verläuft, mindestens einer seitlichen Oberfläche oder Fläche (9) und einer unteren Basis (10), gegenüber der besagten Öffnung (6), besteht, worin die besagte erste Komponente (4) aus mindestens zwei Teilen besteht und mindestens einen ersten Abschnitt, der durch die besagte(n) vordere (7), hintere (8) und seitlichen (9) Oberfläche(n) oder Fläche(n) gebildet wird, und einen zweiten Abschnitt (14), der über dem besagten ersten Abschnitt angeordnet ist, umfasst, mit einer im Wesentlichen parallelepipedischen Form und/oder einer im Wesentlichen zylindrischen oder röhrenförmigen Form, und
Bereitstellen mindestens eines lösbaren Verbindungsmittels (25), das mindestens ein Band (25a) umfasst, das mit mindestens einem Riemen- und/oder Klettverschlusselement versehen ist,
Verbinden des besagten mindestens einen Verbindungsmittels (25) mit der besagten ersten Komponente (4),
lösbares Festhalten der besagten ersten Komponente (4) im Gebrauch an der mindestens einen Stange eines Rahmens des Fahrrads oder des ähnlichen Fahrzeugs und/oder des Heckgepäckträgers und/oder des Frontgepäckträgers und/oder des Lenkers mittels des besagten mindestens einen Verbindungsmittels (25),
Bereitstellen einer zweiten Komponente (5) in Form eines Sacks, Rucksacks oder einer Tasche und mindestens teilweise Unterbringung der besagten zweiten Komponente (5) in der besagten ersten Komponente (4) mittels der besagten Öffnung (6), die in derselben vorhanden ist, worin die besagte zweite Komponente (5) an dem besagten Trägerbehälter (4) mittels einer elastischen Schnur oder eines elastischen Bands (30), die/das mittels Schnallen und/oder Bändern und/oder mittels Schlitzen (21) an dem besagten Trägerbehälter (4) befestigt ist, lösbar festgehalten ist.

13. Verfahren nach Anspruch 12, worin der besagte Schritt des Bereitstellens mindestens eines Verbindungsmittels (25) das Bereitstellen des besagten mindestens einen Bands (25a), versehen mit einem ersten Ende (26) und mit einem zweiten Ende (27), umfasst, worin das besagte erste Ende (26) mit einer ringförmigen Schnalle versehen ist, die möglicherweise abgeflacht ist, um eine im Wesentlichen rechteckige oder ovale Form anzunehmen, mit einer Länge, die etwa der Breite des besagten Bands (25a) entspricht, Durchführen des besagten zweiten Endes (27) durch mindestens einen Schlitz (21), vorhanden in dem besagten ersten Behälter (4), optional durch zwei Schlitze (21), in einer solchen Weise, dass sowohl das besagte erste Ende (26) als auch das besagte zweite Ende (27) zu dem besagten Fahrrad oder ähnlichen Fahrzeug hin gerichtet sind,
Durchführen des besagten zweiten Endes (27) des besagten mindestens einen Bands (25a) um mindestens eine Stange des Rahmens des Fahrrads und/oder des Heckgepäckträgers und/oder des Frontgepäckträgers und/oder des Lenkers, um die besagte mindestens eine Stange zu umschließen,
Durchführen des besagten zweiten Endes (27) durch die besagte Schnalle, vorhanden in dem besagten ersten Ende (26), und Festziehen, so dass das besagte mindestens eine Band (25a) um die besagte mindestens eine Stange herum festgezogen wird,
Falten des besagten zweiten Endes (27) auf sich selbst, so dass das besagte mindestens eine Riemen- und/oder Klettverschlusselement lösbar mit der besagten hinteren Wand (18) und/oder hinteren Oberfläche oder Fläche (8) des besagten Trägerbehälters (4) in einem Bereich (28) verbunden ist, der von einem Klebeelement oder von einem Mittel bedeckt ist, das dem besagten mindestens einen Riemen- und/oder Klettverschlusselement, in Bezug auf das an dem besagten zweiten Ende (27) vorhandene Element, entspricht.

14. Fahrrad oder ähnliches Fahrzeug, umfassend mindestens eine Tasche (1) nach irgendeinem der Ansprüche 1 bis 11.

15. Kit, umfassend eine Tasche (1) nach irgendeinem der Ansprüche 1 bis 11, umfassend eine erste Komponente (4), eine zweite Komponente (5) in Form eines Sacks, Rucksacks oder einer Tasche und möglicherweise eine Außenhülle (36), worin die besagte zweite Komponente (5) dazu ausgelegt ist, mindestens teilweise in der besagten ersten Komponente (4) oder in der besagten Außenhülle (36) untergebracht zu werden, so dass sie vom Benutzer transportiert werden kann, und worin die besagte zweite Komponente (5) lösbar an der besagten ersten Komponente (4) festgehalten wird.

## Revendications

1. Sacoche pour une bicyclette ou un véhicule similaire, adaptée en cours d'utilisation pour être contrainte de manière amovible à au moins une barre d'un cadre de la bicyclette ou du véhicule similaire et/ou à un porte-bagage arrière et/ou à un porte-bagage avant et/ou à un guidon de la bicyclette ou du véhicule similaire, dans laquelle ladite sacoche (1) comprend un premier composant (4), dans laquelle ledit premier composant (4) comprend un conteneur de support muni d'une ouverture (6), dans laquelle ledit premier composant (4) est composé d'au moins une surface ou face frontale (7), adaptée en cours d'utilisation pour être orientée vers l'extérieur par rapport au cadre de la bicyclette, d'une surface ou face arrière (8), adaptée en cours d'utilisation pour entrer en contact ou pour être contrainte avec le cadre de la bicyclette et sensiblement parallèle à ladite surface ou face frontale (7), d'au moins une surface ou face latérale (9) et d'une base inférieure (10), opposée à ladite ouverture (6),
dans laquelle ledit premier composant (4) est constitué d'au moins deux pièces et comprend au moins une première portion formée par lesdites surfaces ou faces avant (7), arrière (8) et latérales (9) et une deuxième portion (14) positionnée au-dessus de ladite première portion, ayant une forme sensiblement parallélépipédique et/ou une forme sensiblement cylindrique ou tubulaire, dans laquelle ledit premier composant (4) a au moins un moyen de connexion amovible (25) comprenant au moins une bande (25a) munie d'au moins une sangle et/ou élément de fermeture à crochets et boucles, pour contraindre de manière amovible en cours d'utilisation ledit premier composant (4) à l'au moins une barre du cadre de la bicyclette ou du véhicule similaire et/ou du porte-bagage arrière et/ou du porte-bagage avant et/ou du guidon de la bicyclette ou du véhicule similaire **caractérisée en ce que** ladite sacoche (1) comprend un deuxième composant (5), sous la forme d'un sac, sac à dos ou sacoche, adapté pour être au moins partiellement logé, d'une manière amovible, dans ledit premier composant (4) à travers ladite ouverture (6), et **en ce que** ledit deuxième composant (5) est contraint de manière amovible audit conteneur de support (4) au moyen d'un cordon ou d'une bande élastique (30) qui est fixé au moyen de boucles, et/ou de bandes et/ou au moyen de fentes (21) audit conteneur de support (4).

2. Sacoche selon la revendication 1, dans laquelle ledit au moins une surface ou face frontale (7) est sensiblement parallèle à une plus grande extension d'une roue avant (2) et/ou d'une roue arrière (3).

3. Sacoche selon la revendication 2, dans laquelle lesdites surfaces ou faces frontale et arrière (7, 8) et/ou lesdites surfaces ou faces latérales (9) ont la même taille et/ou la même hauteur (H), et/ou dans laquelle ladite surface ou face avant (7), ladite surface ou face arrière (8), lesdites surfaces ou faces latérales (9) ont respectivement un bord d'extrémité (7a, 8a, 9a) qui forme un périmètre unique et/ou supérieur (11) et se trouvant sur un plan sensiblement parallèle au sol.

4. Sacoche selon l'une quelconque des revendications précédentes, dans laquelle ladite deuxième portion (14) comprend une paroi frontale (17) munie d'un bord d'extrémité inférieur (17a), une paroi arrière (18) munie d'un bord d'extrémité inférieur (18a) et au moins une paroi latérale (19) munie d'un bord d'extrémité inférieur (19a), ainsi qu'une ouverture inférieure délimitée par lesdits bords d'extrémité inférieurs (17a, 18a, 19a) et/ou par un bord périphérique inférieur (16) formé par lesdits bords d'extrémité inférieurs (17a, 18a, 19a) et, sur la partie supérieure, ladite ouverture (6), dans laquelle ledit périmètre inférieur (16) est adapté pour entrer en contact avec ledit périmètre (11), et/ou dans laquelle ladite deuxième portion (14) s'écarte, éventuellement d'une manière amovible, dudit périmètre (11) de ladite première portion et/ou est contrainte, éventuellement d'une manière amovible, à ladite première portion au moyen de moyens de couplage (12), par exemple sous forme de bandes élastiques ou clips ou crochets par pression, ou par ajustement ou par interférence, etc.

5. Sacoche selon la revendication précédente, comprenant au moins un accessoire, tel que par exemple un porte-bouteille d'eau, un moyen réfléchissant, une lumière, etc., dans laquelle ledit au moins un accessoire est couplé auxdits moyens de couplage (12) et/ou dans laquelle lesdits moyens de couplage (12) sont positionnés au niveau de ladite paroi frontale (17) afin d'être couplés à ladite surface ou face (7), et/ou au niveau de ladite paroi latérale (19) afin d'être couplés à ladite surface ou face latérale (9), et/ou au niveau de ladite paroi arrière (18) afin d'être couplés à ladite surface ou face arrière (8).

6. Sacoche selon l'une quelconque des revendications précédentes, dans laquelle ledit premier composant (4) a une forme sensiblement parallélépipédique ou une forme sensiblement cylindrique ou une forme sensiblement semi-sphérique ou une forme semi-ellipsoïdale, et/ou une forme adaptée pour déterminer un espace interne, ouvert au moyen de ladite ouverture (6), pour loger au moins partiellement ledit deuxième composant (5) et/ou dans laquelle ledit premier composant (4) comprend ladite au moins une fente (21) généralement avec une progression longitudinale qui est sensiblement horizontale ou parallèle au sol, et/ou comprend ladite au moins une fente (21) d'une longueur comprise entre 2 cm et 4 cm et/ou adaptée pour contraindre d'autres composants audit premier composant (4), par exemple au moyen de clips, de boucles ou de moyens de fixation similaires, et/ou dans laquelle deux desdites fentes (21) sont présentes, l'une positionnée sur l'autre, espacées d'un espace d'environ 0,5 cm à 2 cm.

7. Sacoche selon l'une quelconque des revendications précédentes, dans laquelle ledit au moins un moyen de connexion (25) est placé au niveau d'une zone, supérieure en cours d'utilisation, de ladite surface ou face arrière (8) et/ou de ladite paroi arrière (18) dudit premier composant (4), en position latérale droite ou gauche en cours d'utilisation ou centrale, et/ou dans laquelle ledit au moins une bande (25a) est insérée dans une ou deux desdites fentes (21) afin de faire saillie, avec ses deux extrémités (26, 27), derrière ledit premier composant (4), vers le cadre de la bicyclette ou véhicule similaire, de manière à pouvoir contraindre ledit premier composant (4) à la bicyclette ou véhicule similaire, et/ou dans laquelle ledit au moins une bande (25a) comprend deux extrémités (26, 27) qui ont ladite au moins une sangle et/ou élément de fermeture à crochets et boucles, ou élément adhésif pour connecter une première extrémité (26) à la deuxième extrémité (27), et/ou dans laquelle ledit au moins une bande (25a) comprend une première extrémité (26) munie d'une boucle annulaire, éventuellement aplatie afin de prendre une forme sensiblement rectangulaire ou ovale, d'une longueur égale à peu près à la largeur de ladite bande (25a), dans laquelle ladite boucle est adaptée pour permettre le passage d'une deuxième extrémité (27) de ladite au moins une bande (25a), de manière à ce que cette dernière entoure une barre du porte-bagage et/ou du cadre de la bicyclette.

8. Sacoche selon l'une quelconque des revendications précédentes lorsqu'elle dépend de la revendication 4, dans laquelle ladite paroi frontale (17) a une première hauteur (H1), ladite paroi arrière (18) a une deuxième hauteur (H2) par rapport audit périmètre inférieur (16), dans laquelle (H2) est plus grande que (H1), et lesdites parois latérales (19) ont une hauteur (h) allant de (H1) à (H2), puisqu'elles servent de connexion entre la paroi frontale (17) et la paroi arrière (18), et/ou dans laquelle au niveau d'une zone plus haute en cours d'utilisation ou au niveau d'une zone supérieure de ladite paroi arrière (18) et/ou au niveau d'un bord supérieur (18a) de ladite paroi arrière (18), une poignée (20) est présente et adaptée pour être saisie par un utilisateur afin de positionner et/ou de retirer ledit premier composant (4).

9. Sacoche selon la revendication précédente, dans laquelle ladite poignée (20) comprend ou est déterminée par une fente transversale, par exemple parallèle au sol, et/ou est formée de manière ergonomique et/ou rembourrée d'un matériau approprié, afin d'améliorer le confort de serrage par l'utilisateur.

10. Sacoche selon l'une quelconque des revendications précédentes, dans laquelle ledit premier composant (4) est constitué d'un matériau plastique, de carbone, d'un tissu, par ex. tricoté, d'un tissu non tissé, etc., éventuellement léger, et/ou d'un matériau rigide et/ou matériau résistant et/ou matériau durable et/ou matériau imperméable, et/ou matériau nettoyable, et/ou comprenant un traitement adapté pour le rendre hydrofuge, résistant aux taches, résistant à l'abrasion, etc.

11. Sacoche selon l'une quelconque des revendications précédentes, dans laquelle ledit premier composant (4) comprend un couvercle (22) adapté en cours d'utilisation pour fermer ladite ouverture (6), dans laquelle ledit couvercle (22) a une forme sensiblement correspondant à celle de ladite ouverture (6), éventuellement muni d'un bord latéral (22a) afin d'améliorer la fermeture dudit premier composant (4), et/ou dans laquelle ledit couvercle (22) est fixé à ladite paroi arrière (18) de ladite deuxième portion (14) ou à ladite surface ou face arrière (8) dudit premier composant (4) au moyen de bandes ou de boucles ou au moyen de moyens d'articulation appropriés (22b), éventuellement amovibles.

12. Procédé pour connecter de manière amovible une sacoche pour une bicyclette ou un véhicule similaire selon l'une quelconque des revendications précédentes, adaptée en cours d'utilisation pour être contrainte de manière amovible à au moins une barre d'un cadre de la bicyclette ou du véhicule similaire et/ou du porte-bagage arrière et/ou du porte-bagage avant et/ou du guidon, comprenant les étapes suivantes :
fournir un premier composant (4), dans laquelle ledit premier composant (4) comprend un conteneur de support muni d'une ouverture (6), dans laquelle ledit premier composant (4) est composé d'au moins une surface ou face frontale (7), adaptée en cours d'utilisation pour être orientée vers l'extérieur par rapport au cadre de la bicyclette, d'une surface ou face arrière (8), adaptée en cours d'utilisation pour entrer en contact et/ou être contrainte avec le cadre de la bicyclette et sensiblement parallèle à ladite surface ou face frontale (7), d'au moins une surface ou face latérale (9) et d'une base inférieure (10), opposée à ladite ouverture (6), dans laquelle ledit premier composant (4) est constitué d'au moins deux pièces et comprend au moins une première portion formée par lesdites surfaces ou faces avant (7), arrière (8) et latérales (9), et d'une deuxième portion (14) positionnée au-dessus de ladite première portion, ayant une forme sensiblement parallélépipédique et/ou une forme sensiblement cylindrique ou tubulaire, et
fournir au moins un moyen de connexion amovible (25) comprenant au moins une bande (25a) munie d'au moins une sangle et/ou élément de fermeture à crochets et boucles,
connecter ledit au moins un moyen de connexion (25) audit premier composant (4),
contraindre de manière amovible en cours d'utilisation ledit premier composant (4) à au moins une barre d'un cadre de la bicyclette ou du véhicule similaire et/ou du porte-bagage arrière et/ou du porte-bagage avant et/ou du guidon au moyen dudit au moins un moyen de connexion (25),
fournir un deuxième composant (5) sous la forme d'un sac, sac à dos ou sacoche et loger au moins partiellement ledit deuxième composant (5) dans ledit premier composant (4) au moyen de ladite ouverture (6) présente dans celui-ci, dans lequel ledit deuxième composant (5) est contraint de manière amovible audit conteneur de support (4) au moyen d'un cordon ou bande élastique (30) qui est fixé au moyen de boucles, et/ou bandes et/ou au moyen de fentes (21) audit conteneur de support (4).

13. Procédé selon la revendication 12, dans lequel ladite étape de fourniture d'au moins un moyen de connexion (25) comprend fournir au moins une bande (25a) munie d'une première extrémité (26) et d'une deuxième extrémité (27), dans laquelle ladite première extrémité (26) est munie d'une boucle annulaire, éventuellement aplatie afin de prendre une forme sensiblement rectangulaire ou ovale, d'une longueur égale à peu près à la largeur de ladite bande (25a), passer ladite deuxième extrémité (27) dans au moins une fente (21) présente dans ledit premier conteneur (4), en option dans deux fentes (21), de manière à ce que ladite première extrémité (26) et ladite deuxième extrémité (27) soient dirigées vers ladite bicyclette ou véhicule similaire,
passer ladite deuxième extrémité (27) de ladite au moins une bande (25a) autour d'au moins une barre du cadre de la bicyclette et/ou du porte-bagage arrière et/ou du porte-bagage avant et/ou du guidon afin d'entourer ladite au moins une barre,
passer ladite deuxième extrémité (27) dans ladite boucle présente dans ladite première extrémité (26) et serrer de sorte que ladite au moins une bande (25a) soit serrée autour de ladite au moins une barre,
replier ladite deuxième extrémité (27) sur elle-même de sorte que ladite au moins une sangle et/ou élément de fermeture à crochets et boucles soit connectée de manière amovible à ladite paroi arrière (18) et/ou à la surface ou face arrière (8) dudit conteneur de support (4), dans une aire (28) recouverte d'un élément adhésif ou par un moyen correspondant à ladite au moins une sangle et/ou élément de fermeture à crochets et boucles, par rapport à celui présent au niveau de ladite deuxième extrémité (27).

14. Bicyclette ou véhicule similaire, comprenant au moins une sacoche (1) selon l'une quelconque des revendications 1 à 11.

15. Kit comprenant une sacoche (1) selon l'une quelconque des revendications 1 à 11, comprenant un premier composant (4), un deuxième composant (5) sous la forme d'un sac, sac à dos ou sacoche et éventuellement un boîtier externe (36), dans lequel ledit deuxième composant (5) est adapté pour être au moins partiellement logé dans ledit premier composant (4) ou dans ledit boîtier externe (36), de manière à pouvoir être transportée par l'utilisateur, et dans laquelle ledit deuxième composant (5) est fixé de manière amovible audit premier composant (4).
